(19) **Europäisches Patentamt**
**European Patent Office**
**Office européen des brevets**

(11) **EP 3 782 259 B1**

(12) **FASCICULE DE BREVET EUROPEEN**

(45) Date de publication et mention
de la délivrance du brevet:
**04.06.2025 Bulletin 2025/23**

(21) Numéro de dépôt: **19714449.6**

(22) Date de dépôt: **05.04.2019**

(51) Classification Internationale des Brevets (IPC):
***H02J 50/12*** *(2016.01)*    ***B60L 53/30*** *(2019.01)*
***B60L 53/12*** *(2019.01)*    ***B60L 5/00*** *(2006.01)*
***B60L 53/66*** *(2019.01)*

(52) Classification Coopérative des Brevets (CPC):
**H02J 50/12; B60L 5/005; B60L 53/12; B60L 53/32;**
**B60L 53/66;** Y02T 10/70; Y02T 10/7072;
Y02T 90/12; Y02T 90/14; Y02T 90/16

(86) Numéro de dépôt international:
**PCT/EP2019/058625**

(87) Numéro de publication internationale:
**WO 2019/201625 (24.10.2019 Gazette 2019/43)**

(54) **SYSTÈME OPTIMISÉ DE RECHARGE DYNAMIQUE DE VÉHICULES ÉLECTRIQUES**

OPTIMIERTES SYSTEM ZUR DYNAMISCHEN AUFLADUNG VON ELEKTROFAHRZEUGEN

OPTIMISED SYSTEM FOR DYNAMIC CHARGING OF ELECTRIC VEHICLES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.04.2018 FR 1853457**

(43) Date de publication de la demande:
**24.02.2021 Bulletin 2021/08**

(73) Titulaire: **Electricité de France**
**75008 Paris (FR)**

(72) Inventeurs:
• **LUCIDARME, Thierry**
**78460 CHEVREUSE (FR)**
• **DUPRE-LA-TOUR, Stéphane**
**78100 SAINT GERMAIN EN LAYE (FR)**

(74) Mandataire: **Plasseraud IP**
**104 Rue de Richelieu**
**CS92104**
**75080 Paris Cedex 02 (FR)**

(56) Documents cités:
**DE-A1- 102015 121 155**    **JP-A- 2009 045 967**
**US-A- 5 669 470**

## Description

La présente invention concerne le domaine de l'électrification de voies de circulation, en particulier des autoroutes, afin d'alimenter dynamiquement les véhicules y circulant, en électricité.

La réduction des émissions de gaz à effet de serre est un enjeu majeur du 21ème siècle, en particulier dans le domaine des transports, dépendant grandement des énergies fossiles : pétrole ou méthane (« *gaz naturel* »).

En parallèle, les nécessités de croissance du commerce local, national et international et les impératifs logistiques associés requièrent des transports de marchandises efficaces sur des axes rapides et fiables tels que des autoroutes.

La substitution de la consommation directe des énergies fossiles en combustion par l'énergie électrique est une réponse crédible au défi ci-dessus.

L'utilisation de véhicules électriques (de particuliers ou pour le transport de marchandises) se développe. Cependant, l'autonomie de tels véhicules, en raison de la taille des batteries nécessaires, est limitée. Il existe donc un besoin de proposer une architecture d'autoroute électrifiée comprenant des moyens de recharge pour recharger les véhicules en mouvement circulant sur l'autoroute, afin de permettre d'augmenter l'autonomie en mode électrique des véhicules, et ainsi l'efficacité globale du transport sur autoroute d'un point de vue des émissions de CO2.

Des solutions de recharge électrique de véhicules en mouvement, appelée « *dynamic charging* » en anglais, ont déjà été proposées.

Une solution, pour l'instant expérimentale, propose de doter des autoroutes de lignes électriques aériennes permettant à des camions équipés d'un moteur électrique et utilisant un système de caténaires/pantographes de s'alimenter électriquement et de recharger leurs batteries.

Une autre solution consiste à doter une autoroute de boucles de charge inductives placées sous le revêtement de l'autoroute et espacées régulièrement pour permettre une charge des véhicules électriques empruntant l'autoroute.

Chaque boucle de charge inductive peut être alimentée par un transformateur placé le long de la voie (par exemple tous les 150 mètres).

Toutefois, de tels systèmes de recharge sont très coûteux s'ils sont répartis sur la totalité d'une route ou d'une autoroute.

En Corée du Sud, il est proposé un système de recharge réparti sous la route qui est censé permettre, en utilisant 5 à 15% de la route totale, de charger les batteries de bus électriques à 85% tout en limitant la taille des batteries à un tiers de la taille qui aurait était nécessaire sans le système de recharge.

Un tel système est adapté à des bus électriques ayant des parcours prédéfinis, mais n'est cependant pas optimisé pour des véhicules individuels ou des véhicules de transport de marchandises.

Il conviendrait cependant d'optimiser la répartition de tels moyens de manière à permettre une recharge efficace des véhicules en circulation tout en minimisant les coûts associés au système de recharge.

Il est également connu du document US5669470 un système de recharge de véhicules électriques réparti en plusieurs groupes espacés les uns des autres sur des portions de route. Le document JP2009045967 décrit un système de transmission d'énergie à un véhicule électrique, dont des moyens de recharge sont disposés à intervalles réguliers le long d'une route. Le document DE102015121155 décrit système de chargement d'un véhicule électrique, dans lequel des moyens de recharge sont disposés sur une voie secondaire d'autoroute.

Toutefois, la répartition de ces systèmes de recharge nécessite encore d'être optimisée.

La présente invention vient améliorer la situation.

Un premier aspect de l'invention concerne un système de recharge pour véhicule électrique comprenant une pluralité de moyens de recharge, dans lequel les moyens de recharge sont disposés sur une voie d'une autoroute et sont aptes à recharger dynamiquement les véhicules électriques circulant sur la voie, la voie comprenant au moins une première zone avant ou après un point d'embranchement de l'autoroute dans le sens de circulation et à proximité du point d'embranchement, et au moins une deuxième zone distincte de la première zone, dans lequel les moyens de recharge sont disposés de manière à ce qu'une densité des moyens de recharge dans la première zone soit supérieure à une densité des moyens de recharge dans la deuxième zone distincte de la première zone.

La concentration de moyens de recharge à proximité d'un point d'embranchement d'autoroute permet d'optimiser la recharge des véhicules électriques circulant sur l'autoroute tout en minimisant les coûts associés au système de recharge, puisque la quantité de moyens de recharge est réduite comparativement à une répartition uniforme sur l'autoroute. En effet, dans les deuxièmes zones, qui ne sont pas situées à proximité de point d'embranchement, le niveau de puissance de charge des véhicules électriques peut être maintenu à des valeurs basses en diminuant la densité de moyens de recharge comparativement à la densité dans la ou les premières zones.

Selon un mode de réalisation, au moins une première zone peut être située avant un point d'embranchement, le point d'embranchement comprenant une sortie de l'autoroute.

Il est ainsi rendu possible de diminuer la quantité de moyens de recharge tout en assurant que des véhicules, tels que des camions, puissent sortir d'une autoroute et atteindre une base logistique ou une destination située relativement loin de la sortie.

En complément, une pluralité de première zones peuvent être situées avant et à proximité de sorties respectives de l'autoroute, des deuxièmes zones peuvent correspondre à des zones situées entre deux premières zones consécutives, les densités respectives des moyens de recharge dans les premières zones peuvent être sensiblement égales et les densités des moyens de recharge dans les premières zones peuvent être supérieures aux densités dans les deuxièmes zones.

Ainsi, la répartition des moyens de recharge peut être optimisée sur l'ensemble d'une autoroute, réduisant ainsi les coûts tout en permettant un niveau de charge élevé à proximité des sorties de l'autoroute.

En complément, les densités des moyens de recharge dans les premières zones sont au moins deux fois supérieures aux densités des moyens de recharge dans les deuxièmes zones.

La densité de moyens de recharge est ainsi limitée dans les deuxièmes zones ce qui permet de réduire les coûts.

En complément, la densité des moyens de recharge dans au moins l'une des deuxièmes zones est nulle.

Ainsi, la quantité de moyens de recharge est diminuée ce qui permet de réduire les coûts du système de recharge.

Selon un mode de réalisation, chaque première zone peut correspondre à une voie de l'autoroute avant une sortie d'autoroute respective dans le sens de circulation de la voie et la première zone a une taille correspondant à une fraction donnée d'une distance entre la sortie et une sortie précédente.

La taille des premières zones est ainsi optimisée en fonction de la configuration et du tracé de l'autoroute.

De manière alternative non comprise dans l'invention, les premières zones peuvent avoir toutes une même taille.

Un tel mode de réalisation facilite l'installation des moyens de recharge.

Selon un mode de réalisation, une densité moyenne de moyens de recharge sur l'autoroute peut dépendre d'au moins un facteur parmi les facteurs suivants :

- une vitesse moyenne ;
- une capacité minimale de batterie de véhicule automobile ;
- une consommation à une vitesse donnée et pour une masse de batterie donnée ;
- un taux de puissance de charge de batterie de véhicule automobile.

Ainsi, la répartition des moyens de recharge entre première(s) zone(s) et deuxième(s) zone(s) peut être réalisée en fonction d'une valeur de densité moyenne permettant d'atteindre un niveau de charge cible des batteries.

Selon un mode de réalisation, la densité dans la première zone est déterminée de manière à assurer un taux de charge d'un véhicule automobile donné supérieur à un seuil donné après avoir traversé ladite première zone

Ainsi, un niveau de batterie supérieur à un seuil est assuré à proximité des sorties ce qui permet d'assurer une autonomie maximisée des véhicules en dehors de l'autoroute.

Selon un mode de réalisation, au sein de la première zone avant une sortie donnée, la densité linéaire de moyens de recharge peut être inversement proportionnelle à la distance jusqu'à la sortie donnée.

La répartition des moyens de recharge est ainsi optimisée au sein des premières zones.

Selon un mode de réalisation, au moins une première zone est située après un point d'embranchement, le point d'embranchement comprenant une entrée de l'autoroute.

Un tel mode de réalisation permet d'assurer un taux de puissance de charge supérieur à un seuil donné à proximité des entrées afin de charger au mieux les batteries des véhicules électriques qui auraient déjà parcouru un trajet donné avant d'accéder à l'autoroute

En complément, la première zone peut avoir une taille inférieure à une taille limite prédéfinie, ce qui permet de diminuer les coûts tout en permettant d'augmenter le taux de puissance de charge s'engageant sur l'autoroute.

En complément ou en variante, la première zone peut avoir une taille égale à une taille minimale pour laquelle, pour une densité de moyens de recharge supérieure à un seuil donné, un taux de puissance de charge d'un véhicule électrique augmente d'une valeur prédéfinie comprise entre 10 à 20 % lorsque le véhicule électrique parcourt la première zone.

Il est ainsi permis de recharger la batterie d'un véhicule automobile donné d'une valeur prédéfinie tout en optimisant la quantité de moyens de recharge utilisée, et donc les coûts.

Selon des modes de réalisation, les moyens de recharge peuvent être l'un au moins, ou n'importe quelle combinaison, parmi les moyens de recharge suivants :

- des caténaires ;
- des rails électriques ; et
- des boucles inductives.

D'autres caractéristiques et avantages de l'invention apparaîtront à l'examen de la description détaillée ci-après, et des dessins annexés sur lesquels:

- la figure 1 présente un système de recharge de véhicules électriques selon un mode de réalisation de l'invention;
- la figure 2 présente une répartition de moyens de recharge dans une première zone selon un mode de réalisation de l'invention.

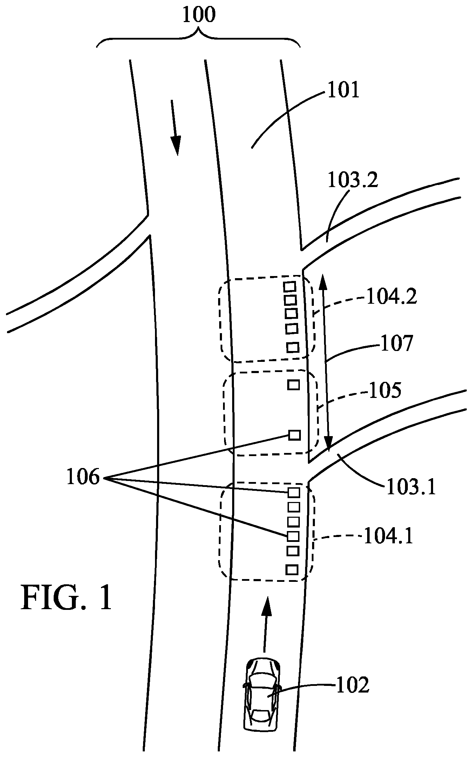

La figure 1 illustre un système de recharge pour véhicule électrique selon un mode de réalisation de l'invention.

Le système comprend une pluralité de moyens de recharge 106 disposés sur une route 100, par exemple une autoroute, en particulier sur une ou plusieurs voies 101. Par exemple, les moyens de recharge 106 peuvent être disposés uniquement sur la voie de droite de l'ensemble de voies 101.

Dans ce qui suit, le terme autoroute est utilisé pour désigner la route 100. Toutefois, aucune restriction n'est attachée à la catégorisation de la route 100.

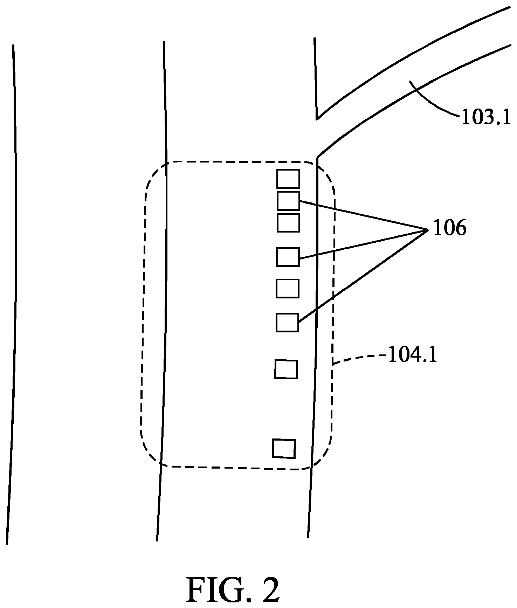

Deux points d'embranchement, qui comprennent des sorties 103.1 et 103.2 dans le sens de circulation de l'ensemble de voies 101, sont représentés sur la figure 1. Aucune limitation n'est attachée au nombre de points d'embranchement que comprend l'autoroute 100. De plus, en référence aux figures 1 et 2, les points d'embranchement comprennent chacun une sortie, à titre illustratif. Toutefois, le point d'embranchement peut comprendre en outre au moins une entrée, ou peut comprendre uniquement une entrée, comme détaillé ultérieurement.

Les moyens de recharge 106 sont aptes à recharger dynamiquement les véhicules électriques, tels que le véhicule 102, circulant sur la voie 101.

Aucune restriction n'est attachée aux moyens de recharge dynamique qui peuvent être des caténaires, des rails électriques, des boucles inductives ou tout moyen équivalent permettant de recharger un véhicule automobile en mouvement.

Des premières zones 104.1 et 104.2 sont respectivement situées avant les points d'embranchement comprenant les sorties 103.1 et 103.2 dans le sens de circulation de la voie 101 et à proximité des points d'embranchement. L'expression « avant et à proximité d'un point d'embranchement » signifie que la première zone est située dans une portion de route s'étendant de la moitié à la fin d'un tronçon entre deux points d'embranchement comprenant deux sorties consécutives, dans le sens de circulation. Les premières zones 104.1 et 104.2 peuvent être des tronçons de la voie 101 respectivement situés avant les sorties 103.1 et 103.2.

Dans un mode de réalisation non compris dans l'invention, aucune restriction n'est attachée à la taille des premières zones 104.1 et 104.2, notamment à leur longueur (dimension dans le sens de la circulation).

Par exemple, les premières zones 104.1 et 104.2 peuvent avoir une même longueur fixe. Selon l'invention, la longueur de la première zone 104.2 est déterminée de manière à correspondre à une fraction prédéterminée de la distance 107 entre les sorties 103.1 et 103.2. Les autres premières zones sont calculées de la même manière en fonction de la même fraction prédéterminée, pour leur espacement respectif entre deux sorties consécutives. Une telle proportionnalité permet d'assurer un niveau de charge suffisant des véhicules automobiles en sortie de première zone.

Une deuxième zone 105 est représentée sur la figure 1, la deuxième zone 105 étant distincte des premières zones 104.1 et 104.2. Par exemple, la deuxième zone 104 peut correspondre à la zone (le tronçon de voie 101) située entre les premières zones 104.1 et 104.2.

Selon l'invention, il est avantageusement proposé qu'une densité des moyens de recharge dans une première zone 104.1 ou 104.2 soit supérieure à une densité des moyens de recharge dans une deuxième zone (la zone 105 par exemple). Une telle répartition des moyens de recharge permet de diminuer la quantité des moyens de recharge, donc de diminuer les coûts du système de recharge, tout en assurant un niveau de charge supérieur des véhicules électriques à l'approche d'une sortie d'autoroute. En effet, si le véhicule électrique sort de l'autoroute, il est préférable qu'il dispose d'un niveau de charge suffisant pour atteindre sa destination via une route qui, possiblement, n'est pas équipée de moyens de recharge dynamique. Les densités de moyens de recharge dans les différentes premières zones peuvent être sensiblement égales, et chacune des densités de moyens de recharge dans les premières zones peut être supérieure à n'importe laquelle des densités dans les deuxièmes zones.

En outre, au sein d'une même première zone, la densité de moyens de recharge peut varier en fonction de la distance jusqu'à la sortie. Par exemple, la figure 2 présente la répartition de moyens de recharge dans la première zone 104.1 selon un mode de réalisation de l'invention.

Au sein de la première zone 104.1, la densité linéaire des moyens de recharge est inversement proportionnelle à la distance jusqu'à la sortie 103.1, ce qui signifie qu'il y a plus de moyens de recharge à proximité de la sortie 103.1.

La densité moyenne sur l'autoroute peut dépendre d'au moins un facteur parmi les facteurs suivants :

- une vitesse moyenne ;
- une capacité minimale de batterie de véhicule automobile ;
- une consommation à une vitesse donnée et pour une masse de batterie donnée ;
- un taux de puissance de charge de batterie de véhicule automobile.

La densité moyenne sur l'autoroute peut par exemple être déterminée de la manière suivante :

$$d = \frac{B \times CR}{C(v, P) \times v}$$

dans lequel v est une vitesse moyenne considérée (par exemple 80 km/h) ;
dans lequel B est une capacité de batterie considérée (par exemple 320 kWh);
dans lequel CR est un taux de puissance de charge (par exemple 5kW par kWh);

C(v, P) est une consommation unitaire maximale en pleine charge pour une classe de véhicules concernées, à la vitesse v et avec le poids P total du véhicule (par exemple 200 kWh par 100 km à 80 km/h pour un véhicule de poids total de 40 tonnes).

En fonction de cette densité moyenne, les moyens de recharge peuvent être répartis dans les premières et deuxièmes zones de manière à ce que, comme présenté ci-dessus, les densités des premières zones soient supérieures aux densités dans les deuxièmes zones.

Par exemple, la densité dans la première zone peut être déterminée de manière à assurer un taux de puissance de charge d'un véhicule automobile (un véhicule automobile type par exemple, ayant une consommation donnée à une vitesse donnée et une capacité de batterie donnée) supérieur à un seuil donné après avoir traversé la première zone. Un tel seuil peut être supérieur à la valeur de taux de puissance de charge considérée pour le calcul de la densité moyenne.

Selon un mode de réalisation, le dernier moyen de recharge d'une première zone peut se trouver immédiatement avant la sortie.

Un exemple de dimensionnement réel est donné ci-après. Pour atteindre 100 kilomètres d'autonomie sans moyen de recharge, une batterie d'au moins 320 kWh est requise.

Une densité moyenne de 10% permet de ne mettre que 10 kilomètres de caténaires par exemple tous les 100 kilomètres, ce qui permet de réduire les coûts. L'invention peut ainsi prévoir de fractionner ces 10 kilomètres de caténaires et de positionner avant chaque sortie un tronçon de caténaires équivalent à un dixième de la distance entre deux sorties consécutives, par exemple 2 kilomètres si cette distance est de 20 kilomètres.

Ainsi, selon l'invention, la distribution plus dense des moyens de recharge avant une sortie permet aux véhicules électriques de sortir de l'autoroute avec une batterie chargée, éventuellement au maximum de sa capacité, afin de garantir une autonomie maximisée hors autoroute.

En outre, comme évoqué précédemment, au moins une première zone peut être située après et à proximité d'un point d'embranchement, qui comprend ainsi une entrée d'autoroute.

L'expression « après et à proximité d'un point d'embranchement » signifie que la première zone est située dans une portion de route s'étendant du début à la moitié d'un tronçon entre deux points d'embranchement comprenant deux entrées consécutives, dans le sens de circulation

De manière duale à ce qui vient d'être décrit, un taux de puissance de charge supérieur à un seuil donné peut-être assuré à proximité des entrées afin de charger au mieux les batteries des véhicules électriques qui auraient déjà parcouru un trajet donné avant d'accéder à l'autoroute. Dans cette perspective, l'invention peut prévoir une première zone à forte densité de charge à proximité immédiate d'une entrée d'autoroute. Une telle première zone peut avoir une taille inférieure à une taille limite donnée, de manière à limiter les coûts.

En particulier, la taille peut être fixée comme étant la valeur minimale pour laquelle une densité élevée (supérieure à un seuil donné, notamment supérieur à la densité de moyens de recharge dans les deuxièmes zones) de moyens de recharge permet d'assurer, pour un véhicule donné, une augmentation du taux de puissance de charge de batterie comprise entre 10% et 20%, préférentiellement 10%. Ceci signifie que la taille de la première zone est déterminée de manière à ce qu'un véhicule électrique s'engageant sur l'autoroute avec un taux de puissance de charge de 20% aura un taux de puissance de charge de 30 à 40% après avoir parcouru la première zone.

A nouveau, aucune restriction n'est attachée aux moyens de recharge dynamique qui peuvent être des caténaires, des rails électriques, des boucles inductives ou tout moyen équivalent permettant de recharger un véhicule automobile en mouvement.

## Revendications

1. Système de recharge pour véhicule électrique (102) comprenant une pluralité de moyens de recharge (106), dans lequel les moyens de recharge sont disposés sur une voie (101) d'une autoroute (100) et sont aptes à recharger dynamiquement les véhicules électriques circulant sur ladite voie, ladite voie comprenant au moins une première zone (104.1 ;104.2) avant ou après un point d'embranchement de l'autoroute dans le sens de circulation et à proximité dudit point d'embranchement, et au moins une deuxième zone (105) distincte de la première zone, dans lequel les moyens de recharge sont disposés de manière à ce qu'une densité des moyens de recharge dans la première zone soit supérieure à une densité des moyens de recharge dans la deuxième zone distincte de ladite première zone,

   dans lequel au moins une première zone est située avant et/ou après un point d'embranchement, ledit point d'embranchement comprenant une sortie et/ou une entrée de l'autoroute, et dans lequel chaque première zone (104.1 ;104.2) correspond à une voie (101) de l'autoroute (100) avant une sortie (103.1 ; 103.2) et/ou après une entrée d'autoroute respective dans le sens de circulation de ladite voie, **caractérisé en ce que** la première zone a une taille correspondant à une fraction donnée d'une distance (107) entre ladite sortie et une sortie précédente et/ou entre ladite entrée et une entrée précédente.

2. Système de recharge selon la revendication 1, dans lequel une pluralité de première zones (104.1 ; 104.2) sont situées avant et à proximité de sorties respectives de ladite autoroute (100), dans lequel des deuxièmes zones (105) correspondent à des zones situées entre deux premières zones consécutives ;
dans lequel les densités respectives des moyens de recharge (106) dans les premières zones sont égales et dans lequel les densités des moyens de recharge dans les premières zones sont supérieures aux densités dans les deuxièmes zones.

3. Système de recharge selon la revendication 2, dans lequel les densités des moyens de recharge (106) dans les premières zones (104.1 ; 104.2) sont au moins deux fois supérieures aux densités des moyens de recharge dans les deuxièmes zones (105).

4. Système selon la revendication 3, dans lequel la densité des moyens de recharge (106) dans au moins l'une des deuxièmes zones (105) est nulle.

5. Système selon l'une des revendications 1 à 4, dans lequel une densité moyenne de moyens de recharge (106) sur l'autoroute (100) dépend d'au moins un facteur parmi les facteurs suivants :

      - une vitesse moyenne ;
      - une capacité minimale de batterie de véhicule automobile ;
      - une consommation à une vitesse donnée et pour une masse de batterie donnée ;
      - un taux de puissance de charge de batterie de véhicule automobile.

6. Système selon l'une des revendications précédentes, dans lequel la densité dans la première zone (104.1 ;104.2) est déterminée de manière à assurer un taux de charge d'un véhicule automobile (102) donné supérieur à un seuil donné après avoir traversé ladite première zone.

7. Système selon l'une des revendications 1 à 6, dans lequel, au sein de la première zone avant une sortie donnée (103.1 ;103.2), la densité de moyens de recharge est inversement proportionnelle à la distance jusqu'à la sortie donnée.

8. Système selon l'une des revendications précédentes, dans lequel au moins une première zone est située après un point d'embranchement, ledit point d'embranchement comprenant une entrée de l'autoroute.

9. Système selon la revendication 8, dans lequel la première zone a une taille inférieure à une taille limite prédéfinie.

10. Système selon la revendication 8 ou 9, dans lequel la première zone a une taille égale à une taille minimale pour laquelle, pour une densité de moyens de recharge supérieure à un seuil donné, un taux de puissance de charge d'un véhicule électrique augmente d'une valeur prédéfinie comprise entre 10 à 20 % lorsque le véhicule électrique parcourt la première zone.

11. Système selon l'une des revendications précédentes, dans lequel les moyens de recharge (106) sont l'un au moins parmi les moyens de recharge suivants :

      - des caténaires ;
      - des rails électriques ; et
      - des boucles inductives.

**Patentansprüche**

1. Ladesystem für ein Elektrofahrzeug (102), das eine Vielzahl von Lademitteln (106) umfasst, wobei die Lademittel auf einer Fahrspur (101) einer Autobahn (100) angeordnet sind und dazu geeignet sind, die auf dieser Fahrspur fahrenden Elektrofahrzeuge dynamisch aufzuladen, wobei die Fahrspur wenigstens einen ersten Bereich (104.1; 104. 2) vor oder nach einem Verzweigungspunkt der Autobahn in Fahrtrichtung und in der Nähe des Verzweigungspunkts umfasst und wenigstens einen zweiten Bereich (105) umfasst, der von dem ersten Bereich verschieden ist, wobei die Lademittel so angeordnet sind, dass eine Dichte der Lademittel in dem ersten Bereich größer ist als eine Dichte der Lademittel in dem zweiten Bereich, der von dem ersten Bereich verschieden ist, wobei wenigstens ein erster Bereich vor und/oder nach einem Verzweigungspunkt angeordnet ist, wobei der Verzweigungspunkt eine Autobahnausfahrt und/oder -einfahrt umfasst,

      und wobei jeder erste Bereich (104.1; 104.2) einer Fahrspur (101) der Autobahn (100) vor einer Ausfahrt (103.1; 103.2) und/oder nach einer jeweiligen Autobahneinfahrt in Fahrtrichtung der Fahrspur entspricht,
      **dadurch gekennzeichnet, dass** der erste Bereich eine Größe hat, die einem gegebenen Bruchteil einer Entfernung (107) zwischen der Ausfahrt und einer vorhergehenden Ausfahrt und/oder zwischen der Einfahrt und einer vorhergehenden Einfahrt entspricht.

2. Ladesystem nach Anspruch 1, wobei sich eine Vielzahl von ersten Bereichen (104.1; 104. 2) vor und in der Nähe jeweiliger Ausfahrten der Autobahn (100) befindet, wobei die zweiten Bereiche (105) Bereichen entsprechen, die sich zwischen zwei aufeinanderfolgenden ersten Bereichen befinden; wobei die jeweiligen Dichten der Lademittel (106) in den ersten Bereichen gleich sind und wobei die Dichten der Lademittel in den ersten Bereichen größer sind als die Dichten in den zweiten Bereichen.

**3.** Ladesystem nach Anspruch 2, wobei die Dichten der Lademittel (106) in den ersten Bereichen (104.1; 104.2) wenigstens doppelt so groß sind wie die Dichten der Lademittel in den zweiten Bereichen (105).

**4.** System nach Anspruch 3, wobei die Dichte der Lademittel (106) in wenigstens einem der zweiten Bereiche (105) Null ist.

**5.** System nach einem der Ansprüche 1 bis 4, wobei eine durchschnittliche Dichte von Lademitteln (106) auf der Autobahn (100) von wenigstens einem der folgenden Faktoren abhängt:

  - einer Durchschnittsgeschwindigkeit;
  - einer Mindestkapazität der Fahrzeugbatterie;
  - einem Verbrauch bei einer gegebenen Geschwindigkeit und für eine gegebene Batteriemasse;
  - einer Ladeleistungsrate der Fahrzeugbatterie.

**6.** System nach einem der vorhergehenden Ansprüche, wobei die Dichte in dem ersten Bereich (104.1; 104.2) so bestimmt wird, dass sie ein bestimmtes Ladeverhältnis eines bestimmten Fahrzeugs (102) über einem bestimmten Schwellenwert nach Durchfahren des ersten Bereichs gewährleistet.

**7.** System nach einem der Ansprüche 1 bis 6, wobei innerhalb des ersten Bereichs vor einer gegebenen Ausfahrt (103.1; 103.2) die Dichte von Lademitteln umgekehrt proportional zur Entfernung zur gegebenen Ausfahrt ist.

**8.** System nach einem der vorhergehenden Ansprüche, wobei sich wenigstens ein erster Bereich hinter einem Verzweigungspunkt befindet, wobei der Verzweigungspunkt eine Autobahnauffahrt umfasst.

**9.** System nach Anspruch 8, wobei der erste Bereich eine Größe aufweist, die kleiner als eine vorgegebene Grenzgröße ist.

**10.** System nach Anspruch 8 oder 9, wobei der erste Bereich eine Größe aufweist, die gleich einer Mindestgröße ist, bei der für eine Ladedichte von Lademitteln, die über einem vorgegebenen Schwellenwert liegt, die Ladeleistungsrate eines Elektrofahrzeugs um einen vordefinierten Wert zwischen 10 und 20 % steigt, wenn das Elektrofahrzeug den ersten Bereich durchfährt.

**11.** System nach einem der vorhergehenden Ansprüche, wobei die Lademittel (106) wenigstens eines der folgenden Lademittel sind:

  - Oberleitungen;
  - Stromschienen; und
  - Induktionsschleifen.

**Claims**

**1.** A charging system for an electric vehicle (102) comprising a plurality of charging means (106), wherein the charging means are disposed on a lane (101) of a motorway (100) and are capable of dynamically charging electric vehicles running on said lane, said lane comprising at least one first zone (104.1; 104.2) before or after a motorway junction point in the direction of traffic and in proximity to said junction point, and at least one second zone (105) distinct from said first zone, wherein the charging means are arranged such that a density of the charging means in the first zone is greater than a density of the charging means in the second zone distinct from said first zone, wherein at least one first zone is located before and/or after a junction point, said junction point comprising an exit and/or an entrance of the motorway, and wherein each first zone (104.1; 104.2) corresponds to a lane (101) of the motorway (100) before an exit (103.1; 103.2) and/or after a respective motorway entrance in the direction of traffic of said lane, **characterised in that** the first zone has a size corresponding to a given fraction of a distance (107) between said exit and a previous exit and/or between said entrance and a previous entrance.

**2.** The charging system according to claim 1, wherein a plurality of first zones (104.1; 104.2) are located before and in proximity to respective exits of said motorway (100), wherein second zones (105) correspond to zones located between two consecutive first zones; wherein the respective densities of the charging means (106) in the first zones are equal and wherein the densities of the charging means in the first zones are higher than the densities in the second zones.

**3.** The charging system according to claim 2, wherein the densities of the charging means (106) in the first zones (104.1; 104.2) are at least twice higher than the densities of the charging means in the second zones (105).

4. The system according to claim 3, wherein the density of the charging means (106) in at least one of the second zones (105) is zero.

5. The system according to one of claims 1 to 4, wherein an average density of charging means (106) on the motorway (100) depends on at least one of the following factors:

   - an average speed;
   - a minimum battery capacity of an automotive vehicle;
   - a consumption at a given speed and for a given battery mass;
   - a battery charging power rate of an automotive vehicle.

6. The system according to one of the preceding claims, wherein the density in the first zone (104.1; 104.2) is determined so as to ensure a charging rate of a given automotive vehicle (102) greater than a given threshold after passing through said first zone.

7. The system according to one of claims 1 to 6, wherein, within the first zone before a given exit (103.1; 103.2), the density of charging means is inversely proportional to the distance to the given exit.

8. The system according to one of the preceding claims, wherein at least one first zone is located after a junction point, said junction point comprising a motorway entrance.

9. The system according to claim 8, wherein the first zone has a size less than a predefined limit size.

10. The system according to claim 8 or 9, wherein the first zone has a size equal to a minimum size for which, for a density of charging means greater than a given threshold, a charging power rate of an electric vehicle increases by a predefined value of between 10 to 20% when the electric vehicle travels through the first zone.

11. The system according to one of the preceding claims, wherein the charging means (106) are at least one of the following charging means:

   - catenaries;
   - electrical rails; and
   - induction loops.

FIG. 1

FIG. 2

**EP 3 782 259 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5669470 A
- JP 2009045967 B

- DE 102015121155